# EUROPÄISCHE PATENTANMELDUNG

(11) **EP 3 950 610 A1**
(43) Veröffentlichungstag der Anmeldung: **09.02.2022**
(21) Anmeldenummer: 20189825.1
(22) Anmeldetag: 06.08.2020
(51) Int. Cl.: C03B 19/14

(54) **ALTERNATIVE FLUORIERUNGSMITTEL II: FLUOSIL UND SOOTAUFBAU**

(71) Anmelder: Heraeus Quarzglas GmbH & Co. KG, 63450 Hanau (DE)
(72) Erfinder: Ochs, Stefan, 63450 Hanau (DE); Kayser, Thomas, 63450 Hanau (DE); Trommer, Martin, 63450 Hanau (DE); Langner, Andreas, 63450 Hanau (DE); Pihan, Sascha, 63450 Hanau (DE); Schuster, Kay, 63450 Hanau (DE); Hünermann, Michael, 63450 Hanau (DE)
(74) Vertreter: Gille Hrabal Partnerschaftsgesellschaft mbB Patentanwälte

(57) **Zusammenfassung**

Beschrieben wird ein Verfahren zur Herstellung von einem fluorierten Quarzglas, umfassend die Verfahrensschritte des Erzeugens von SiO₂-Teichen in einem Synthesebrenner; des Abscheidens der resultierenden SiO₂-Teilchen zu einem Körper; und des Verglasens des resultierenden Körpers, wobei dem Synthesebrenner ein Fluorierungsmittel zugeführt wird, welches einen Siedepunkt von größer gleich -10 °C aufweist.

## Beschreibung

Die vorliegende Erfindung betrifft ein Verfahren zur Herstellung von fluoriertem Quarzglas sowie das durch dieses erfindungsgemäße Verfahren erhältliche fluorierte Quarzglas. Weiterer Gegenstand der vorliegenden Erfindung ist die Verwendung von alternativen und verbesserten Fluorierungsmitteln zur Herstellung von fluoriertem Quarzglas.

Zur Herstellung von synthetischem Quarzglas werden aus einer siliziumhaltigen Ausgangssubstanz in einem CVD-Verfahren durch Hydrolyse oder Oxidation SiO₂-Partikel erzeugt und auf einem sich bewegenden Träger abgeschieden. Es kann dabei zwischen Außen- und Innenabscheideverfahren unterschieden werden. Bei Außenabscheideverfahren werden die SiO₂-Partikel auf der Außenseite eines rotierenden Trägers aufgebracht. Als Beispiele für entsprechende Außenabscheideverfahren seien das so genannte OVD-Verfahren (Outside Vapour Phase Deposition), das VAD-Verfahren (Vapour Phase Axial Deposition), das POD-Verfahren (Plasma Outside Deposition) oder das PECVD-Verfahren (Plasma Enhanced Chemical Vapour Deposition) genannt. Als bekannteste Beispiele für ein Innenabscheideverfahren seien das MCVD-Verfahren (Modified Chemical Vapour Deposition), das FCVD-Verfahren (Furnace Chemical Vapour Deposition) und das PCVD-Verfahren (Plasma Chemical Vapour Deposition) genannt, bei dem auf der Innenwandung eines von außen erhitzten Rohres SiO₂-Partikel abgeschieden werden.

Bei hinreichend hoher Temperatur im Bereich der Trägeroberfläche kommt es zu einem unmittelbaren Verglasen der SiO₂-Partikel, was auch als "Direktverglasen" bekannt ist. Im Unterschied dazu ist beim sogenannten "Sootverfahren" die Temperatur beim Abscheiden der SiO₂-Partikel so niedrig, dass eine poröse SiO₂-Sootschicht erhalten wird, die dann in einem separaten Verfahrensschritt zu transparentem Quarzglas gesintert wird. Sowohl das Direktverglasungsverfahren als auch das Sootverfahren führen zu einem dichten, transparenten, hochreinen und synthetischen Quarzglas.

Durch das Einbringen von Fremdatomen in das Quarzglas lassen sich dessen physikalische Eigenschaften beeinflussen. So führt beispielsweise das Dotieren von Quarzglas mit Fluor zu einer Absenkung des Brechungsindexes. Fluordotiertes Quarzglas wird daher unter anderem zur Herstellung lichtleitender Brechzahlstrukturen in optischen Fasern verwendet, zum Beispiel für Spezialfasern zu Lichtleistungsübertragung, die eine oder mehrere F-dotierte, brechzahlabgesenkte Mantelschichten aufweisen, für die Herstellung von aktiven Hochleistungs-Laserfasern und deren Vorprodukten mit F-dotierter äußerer Mantelschicht, für fluordotierte Rohre und Kapillare, die unter anderem für Faser-Combiner eingesetzt werden, für biegeunempfindliche Fasern oder in sogenannten "ultra low loss Fasern". Dabei stehen dem Fachmann eine Reihe von Verfahren zur Verfügung. So kann beispielsweise als Halbzeug für derartige optische Fasern entweder eine Vorform eingesetzt werden, die in radialer Richtung ein Brechzahlprofil aufweist und die unmittelbar zu der gewünschten Faser gezogen werden kann. Alternativ kann ein stab- oder rohrförmiger Zylinder, der mindestens eine Schicht aus fluordotiertem Quarzglas aufweist, verwendet werden. Dieser kann zusammen mit anderen zylinderförmigen Bauteilen als Ensemble in koaxialer Anordnung zu der Faser elongiert werden. Weiterhin finden derartige mit Fluor dotierte Quarzglas-Zylinder in der Laser- und Halbleiterfertigung Anwendung.

Aus dem Stand der Technik ist die Herstellung von fluordotiertem Quarzglas bekannt. Die US 2001/0018835 A betrifft beispielsweise die Herstellung von UV-festem, F-dotiertem Quarzglas, wobei Sootkörper in einer Atmosphäre aus Wasserstoff oder Sauerstoff erhitzt werden und in einem sich daran anschließenden Verfahrensschritt eine Sinterung in einer fluorhaltigen Atmosphäre erfolgt. Durch diese zweistufige Behandlung soll eine Verbesserung der UV-Transmission des resultierenden Quarzglases erreicht werden.

Neben dieser Verfahrensweise der nachträglichen Fluorierung von beispielsweise Sootkörpern aus Quarzglas sind auch Verfahren bekannt, in welchen das Fluorierungsmittel bereits bei der Bildung des Quarzglaskörpers zugegen ist.

Ein Beispiel für eine derartige Verfahrensweise ist aus der US 6,598,425 bekannt. In diesem Verfahren wird eine siliziumhaltige Ausgangsverbindung, beispielsweise OMCTS, mit Fluorverbindungen vermischt und in einen Atomisierungsbrenner eingedüst. Die entsprechenden Fluorverbindungen sind entweder CF₄ oder andere, jedoch nicht spezifizierte Perfluorverbindungen. Aus der Gesamtoffenbarung dieses Standes der Technik lässt sich ableiten, dass es sich bei den Perfluorverbindungen um die üblicherweise verwendeten Perfluorverbindungen SF₆, C₂F₆ und NF₃ handelt. Komplexe organische Perfluorverbindungen lassen sich diesem Stand der Technik als geeignete Fluorierungsmittel nicht ableiten. Die sogenannten perfluorierten Gase CF₄, SF₆, C₂F₆ und NF₃ zeigen allerdings ein erhebliches Treibhauspotenzial (GWP, Global Warming Potential) und bleiben aufgrund ihrer chemischen Stabilität sehr lange in der Atmosphäre. Aufgrund von sich verschärfenden Umweltgesetzen und -regularien ist damit zu rechnen, dass das Inverkehrbringen solcher Substanzen zunehmend erschwert wird und die kommerzielle Verfügbarkeit sinkt, sodass sie für den Zweck der Herstellung fluorierter Quarzgläser zumindest dauerhaft nicht mehr zur Verfügung stehen. Ein weiterer Nachteil der aus dem Stand der Technik bekannten Fluorierungsmittel ist ihr geringer Siedepunkt, was eine Handhabung erschwert. So werden für Fluorierungsmittel mit einem niedrigen Siedepunkt in den verwendeten Apparaturen verhältnismäßig große Volumina benötigt, die entsprechenden Fluorierungsmittel müssen verhältnismäßig aufwendig in Druckgasflaschen aufbewahrt werden und zusätzlich sind in der Regel höhere Sicherheitsstandards erforderlich.

In dem Stand der Technik US 6,698,247 wird ebenfalls die Herstellung von einem mit Fluoratomen dotiertem Quarzglas beschrieben, wobei jedoch als siliziumhaltige Ausgangsverbindung ein entsprechendes Fluorderivat verwendet wird. Diese Verfahrensweise hat den Nachteil, dass die entsprechende siliziumhaltige Vorläuferverbindung für die Herstellung des Quarzglases zunächst hergestellt werden muss und man somit nicht auf die allfällig verfügbaren und üblicherweise verwendeten siliziumhaltigen Vorläuferverbindungen, beispielsweise OMCTS, zurückgreifen kann.

Darüber hinaus beschreiben der Stand der Technik EP 2 736 856 A und DE 102 31 037 A Verfahren, in welchen ein Quarzglaskörper durch einen Plasmaaufbau und eine Direktverglasung hergestellt wird.

Konkret offenbart der Stand der Technik EP 2 736 856 A ein Plasma-Abscheideprozess zur Herstellung einer optischen Vorform mit einer Mantelglasschicht aus fluordotiertem Quarzglas, indem mittels eines Plasmabrenners SiO₂-Partikel in Gegenwart von Fluor gebildet und auf der Zylindermantelfläche eines um seine Längsachse rotierenden, zylinderförmigen Substratkörpers aus Quarzglas schichtweise abgeschieden und zu der Mantelglasschicht verglast werden, wobei Plasmabrenner und Substratkörper relativ zueinander bewegt werden, derart, dass sich der Plasmabrenner reversierend zwischen zwei Wendepunkten entlang des Substratkörpers bewegt und wobei auf den Bereich des einen Wendepunktes ein Wärmeelement wärmend einwirkt, wenn sich der Plasmabrenner im Bereich des anderen Wendepunktes befindet.

Ferner offenbart der Stand der Technik DE 102 31 037 A ein Verfahren zur Herstellung einer Vorform aus synthetischem Quarzglas mittels eines plasmaunterstützten Abscheideverfahrens, indem einem mehrdüsigen Abscheidebrenner ein wasserstofffreier Medienstrom enthaltend ein Glasausgangsmaterial und ein Trägergas zugeführt wird, das Glasausgangsmaterial mittels des Abscheidebrenners in eine Plasmazone eingebracht und darin unter Bildung von SiO₂-Partikeln oxidiert wird, die SiO₂-Partikel auf einer Ablagerungsfläche abgeschieden und dabei direkt verglast werden und wobei der Medienstrom mittels des Abscheidebrenners in Richtung auf die Plasmazone fokussiert wird. Dieses aus dem Stand der Technik bekannte Verfahren eignet sich zur Herstellung von fluordotiertem Quarzglas, wobei ein Glasausgangsmaterial eingesetzt wird, das als fluorhaltige Komponente SiF₄ oder SF₆ enthält.

Aufgabe der vorliegenden Erfindung ist daher die Bereitstellung von einem Verfahren zur Herstellung von fluordotiertem Quarzglas, in welchem alternative Fluorierungsmittel Anwendung finden und mit dem die Herstellung fluorierter Quarzgläser möglich ist, wobei die Fluorierungsmittel allenfalls ein geringes Treibhauspotenzial aufweisen und darüber hinaus nicht erfordern, dass man die Fluordotierung, wie insbesondere in der US 6,698,247 beschrieben, zunächst in das siliziumhaltige Vorläufermaterial des Quarzglases synthetisch einbringt und man somit übliche fluorfreie siliziumhaltige Ausgangsmaterialien verwenden kann.

Eine weitere Aufgabe der vorliegenden Erfindung ist die Bereitstellung von einem Verfahren zur Herstellung von fluoriertem Quarzglas mittels alternativer Fluorierungsmittel, die effizient für die Fluorierung von Quarzgläsern eingesetzt werden können.

Aufgabe der vorliegenden Erfindung ist ferner das Bereitstellen eines Verfahrens, das die Herstellung von fluoriertem Quarzglas erlaubt, welches einen hohen Fluorgehalt und eine homogene Verteilung des Dotanden aufweist.

Weiterhin ist es Aufgabe der vorliegenden Erfindung ein Verfahren zur Herstellung von mit Fluor dotiertem Quarzglas bereitzustellen, wobei das Quarzglas einen hohen Gehalt an Fluor bei gleichzeitig geringer Blasigkeit aufweist.

Schließlich ist es eine weitere Aufgabe der vorliegenden Erfindung, ein Verfahren zur Herstellung von fluoriertem Quarzglas bereitzustellen, in welchem ein Fluorierungsmittel verwendet wird, dass einfach gehandhabt werden kann, bei welchen in den verwendeten Apparaturen keine verhältnismäßig großen Volumina benötigt werden, auf eine verhältnismäßig aufwendige Handhabung mit Druckgasflaschen verzichtet werden kann und zusätzlich keine besonders hohen Sicherheitsstandards eingehalten werden müssen.

Gelöst werden diese Aufgaben durch die Verwendung von neuen Fluorierungsmitteln. Diese neuen Fluorierungsmittel zeichnen sich durch einen im Vergleich zum Stand der Technik höheren Siedepunkt aus, was die Handhabung der Fluorierungsmittel zumindest teilweise vereinfacht. Die erfindungsgemäßen Fluorierungsmittel weisen einen Siedepunkt von größer oder gleich -10 °C auf und können somit auf einfache Art und Weise einem Verdampfer zugeführt werden.

Demgemäß betrifft die vorliegende Erfindung ein Verfahren zur Herstellung von einem fluorierten Quarzglas, umfassend zumindest die nachfolgenden Verfahrensschritte:
a. Erzeugen von SiO₂-Teichen in einem Synthesebrenner;
b. Abscheiden der aus Verfahrensschritt a. resultierenden SiO₂-Teilchen zu einem Körper;
c. Verglasen des aus Verfahrensschritt b. resultierenden Körpers.

Das erfindungsgemäße Verfahren ist dann dadurch gekennzeichnet, dass dem Synthesebrenner während des Verfahrensschritts a. ein Fluorierungsmittel zugeführt wird, welches einen Siedepunkt von größer gleich -10 °C aufweist.

Im Rahmen der vorliegenden Erfindung wird von Siedepunkten, die bei Normaldruck (1013 mbar) vorliegen, ausgegangen.

Es ist somit vorgesehen, dass in dem erfindungsgemäßen Verfahren das siliziumhaltige Vorläufermaterial und das Fluorierungsmittel zumindest teilweise gleichzeitig in den Synthesebrenner eingeführt werden, wobei das Fluorierungsmittel einen verhältnismäßig hohen Siedepunkt aufweist, sodass eine einfache Handhabung des Fluorierungsmittels möglich ist. Hierdurch erfolgt die Ausbildung des Quarzglaskörpers unter gleichzeitigem Einbau der Fluordotierung.

Im Rahmen der vorliegenden Erfindung wird unter einem Fluorierungsmittel eine chemische Substanz verstanden, die Fluoratome enthält und in der Lage ist, während des Aufbaus des Quarzglaskörpers Fluoratome einzubauen.

In einer bevorzugten Ausführungsform der vorliegenden Erfindung weist das Fluorierungsmittel einen Siedepunkt von größer oder gleich -5 °C, vorzugsweise größer oder gleich 0 °C, weiter bevorzugt größer oder gleich 5 °C, weiter bevorzugt größer oder gleich 10 °C, weiter bevorzugt größer oder gleich 15 °C, weiter bevorzugt größer oder gleich 20 °C, auf.

Der obere Siedepunkt des erfindungsgemäß nunmehr vorgeschlagenen Fluorierungsmittels unterliegt insofern keinen besonderen technischen Beschränkungen, als dass das Fluorierungsmittel unter den üblichen Verfahrensbedingungen der Herstellung von synthetischem Quarzglas in dem Synthesebrenner verdampft werden kann.

Im Rahmen der vorliegenden Erfindung sind Fluorierungsmittel bevorzugt, welche einen Siedepunkt von weniger oder gleich 300 °C, vorzugsweise weniger oder gleich 275 °C, weiter bevorzugt weniger oder gleich 250 °C, weiter bevorzugt weniger oder gleich 225 °C, weiter bevorzugt weniger oder gleich 200 °C, weiter bevorzugt weniger oder gleich 175 °C, weiter bevorzugt weniger oder gleich 150 °C, aufweisen.

Die vereinfachte Handhabung dieser alternativen Fluorierungsmittel ergibt sich unmittelbar aus den zuvor beschriebenen Siedepunktbereichen.

Damit weisen die erfindungsgemäß vorgesehenen Fluorierungsmittel vorzugsweise einen Siedepunktbereich von -10 bis 300 °C, weiter bevorzugt -5 bis 275 °C, weiter bevorzugt 0 bis 250 °C, weiter bevorzugt 5 bis 225 °C, weiter bevorzugt 10 bis 200 °C, weiter bevorzugt 15 bis 175 °C, noch weiter bevorzugt 20 bis 150 °C, auf.

Bei den erfindungsgemäß vorgesehenen Fluorierungsmitteln handelt es sich insbesondere um ein oder mehrere Fluorierungsmittel, ausgewählt aus der Gruppe, bestehend aus
i. sauerstoffhaltigen Fluorierungsmitteln; und
ii. nitrilhaltigen Fluorierungsmitteln.

Im Rahmen der vorliegenden Erfindung ist es auch möglich, Mischungen der vorgenannten sauerstoffhaltigen und nitrilhaltigen Fluorierungsmittel in dem erfindungsgemäßen Verfahren zu verwenden, wobei im Rahmen der vorliegenden Erfindung unter Mischungen sowohl Mischungen von reinen sauerstoffhaltigen Fluorierungsmitteln, Mischungen von reinen nitrilhaltigen Fluorierungsmitteln und Mischungen von sauerstoffhaltigen und nitrilhaltigen Fluorierungsmitteln verstanden werden.

Im Folgenden werden nunmehr bevorzugte sauerstoffhaltige Fluorierungsmittel näher beschrieben.

In einer ersten Ausführungsform der vorliegenden Erfindung werden als sauerstoffhaltige Fluorierungsmittel Perfluorketone der allgemeinen Formel (I)

R_{F1}-CO-R_{F2} (I)

verwendet, wobei
der Rest R_{F1} ausgewählt wird aus der Gruppe, bestehend aus perfluorierten Kohlenstoffgruppen mit 1 bis 7 Kohlenstoffatomen und Fluor, und
der Rest R_{F2} ausgewählt wird aus der Gruppe, bestehend aus perfluorierten Kohlenstoffgruppen mit 1 bis 7 Kohlenstoffatomen.

In einer bevorzugten Ausgestaltung dieser ersten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser ersten Ausführungsform sind
a) Perfluoro(2-methyl-3-pentanon); oder 1,1,1,2,2,4,5,5,5-nonafluoro-4-(trifluoromethyl)-3-pentanon;
b) Perfluoro(2-methyl-3-butanon), oder 1,1,1,3,4,4,4-heptafluoro-3-(trifluoromethyl)-2-buntanon; und
c) Perfluoro(2,2,-dimetyl-3-butanon).

In einer zweiten Ausführungsform der vorliegenden Erfindung werden als sauerstoffhaltige Fluorierungsmittel Perfluorether der allgemeinen Formel (II)

R_{F1}-C(X₁)(X₂)O-R_{F2} (II),

verwendet, wobei
der Rest R_{F1} ausgewählt wird aus der Gruppe, bestehend aus perfluorierten Kohlenstoffgruppen mit 1 bis 7 Kohlenstoffatomen und Fluor, und
der Rest R_{F2} ausgewählt wird aus der Gruppe, bestehend aus perfluorierten Kohlenstoffgruppen mit 1 bis 7 Kohlenstoffatomen; und die Reste X₁ und X₂ für F oder CF₃ stehen.

In einer bevorzugten Ausgestaltung dieser zweiten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser zweiten Ausführungsform sind
a) Perfluoro-1-methoxypropan;
b) Perfluoro-2-isopropoxy-2-methylpentan;
c) Perfiuoro-1-ethoxyheptan; und
d) Perfluoro-2-n-butoxy-2-methylpentan.

In einer dritten Ausführungsform der vorliegenden Erfindung werden als sauerstoffhaltige Fluorierungsmittel Hydrofluorether der allgemeinen Formel (III)

R_{F1}-C(X₁)(X₂)O-R₂ (III),

verwendet, wobei
der Rest R_{F1} ausgewählt wird aus der Gruppe, bestehend aus perfluorierten Kohlenstoffgruppen mit 1 bis 7 Kohlenstoffatomen und Fluor;
der Rest R₂ für eine nicht-fluorierte Kohlenwasserstoffgruppe mit 1 bis 3 Kohlenstoffatomen steht; und
die Reste X₁ und X₂ für F oder CF₃ stehen.

In einer bevorzugten Ausgestaltung dieser dritten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser dritten Ausführungsform sind
a) Methylnonafluorbutylether;
b) Ethylnonafluorbutylether; und
c) 2-Trifluormethyl-3-ethoxydodekafluorhexan.

Die vorgenannten konkreten Beispiele der ersten bis dritten Ausführungsformen sind kommerziell erhältlich.

Im Folgenden werden nunmehr bevorzugte nitrilhaltige Fluorierungsmittel als vierte Ausführungsform näher beschrieben.

Die nitrilhaltigen Fluorierungsmittel sind vorzugsweise Perfluornitrile der allgemeinen Formel (IV)

R_{F1}-C=N (IV)

wobei der Rest R_{F1} ausgewählt wird aus der Gruppe, bestehend aus einer perfluorierten Kohlenwasserstoffgruppe mit 1 bis 7 Kohlenstoffatomen. In einer bevorzugten Ausgestaltung dieser vierten Ausführungsform besteht die perfluorierte Kohlenstoffgruppe aus 1 bis 6, weiter bevorzugt 2 bis 6, weiter bevorzugt 2 bis 5, weiter bevorzugt 2 bis 4, Kohlenstoffatomen.

Konkrete Beispiele für Verbindungen dieser vierten Ausführungsform sind
a) Heptafluoro-isobutyronitril; oder
b) 2,3,3,3-tetrafluoro-2-(trifluoromethyl)propanenitril.

Auch diese Verbindung ist kommerziell erhältlich.

Wie anhand der vorstehenden Beispiele schon verdeutlicht, werden unter perfluorierten Kohlenstoffgruppen im Rahmen der vorliegenden Erfindung organische Verbindungen verstanden, bei denen an mindestens einem Kohlenstoffatom die Wasserstoffatome am Kohlenstoffgerüst vollständig durch Fluoratome ersetzt worden sind. Vorzugsweise sind alle Wasserstoffatome an dem Kohlenstoffgerüst durch Fluoratome ersetzt.

Im Rahmen der vorliegenden Erfindung ist insbesondere die Verwendung der Fluorierungsmittel der allgemeinen Formeln (I) und (II) bevorzugt, weil sie keine Wasserstoffatome enthalten. Ein Wasserstoffanteil im Fluorierungsmittel könnte nachteilig sein, weil sich unter den angewendeten Zersetzungsbedingungen HF-Moleküle bilden, die wiederum Quarzglasbauteile im Brenner (Standzeit) und den Silica-Soot ätzen und gleichzeitig einen OH-Einbau im Quarzglas fördern.

Im Nachgang werden nun die einzelnen Verfahrensschritte a. bis c. näher beschrieben.

### Verfahrensschritt a.

Zur Herstellung des Quarzglaskörpers wird zunächst ein Einsatzmaterial, das mindestens eine polymerisierbare Polyalkylsiloxanverbindung enthält, unter Bildung eines Einsatzmaterialdampfes verdampft.

Grundsätzlich kann erfindungsgemäß jede polymerisierbare Polyalkylsiloxanverbindung, welche sich zur Herstellung von synthetischem Quarzglas eignet, verwendet werden. Im Rahmen der Erfindung umfasst der Begriff Polyalkylsiloxan sowohl lineare (umfassend auch verzweigte Strukturen) als auch zyklische Molekularstrukturen.

Besonders geeignete cyclische Vertreter sind Polyalkylsiloxane mit der allgemeinen Summenformel

SiₚOₚ(R)₂ₚ,

wobei p eine ganze Zahl größer gleich 2 ist. Der Rest "R" ist eine Alkylgruppe, im einfachsten Fall eine Methylgruppe.

Polyalkylsiloxane zeichnen sich durch einen besonders hohen Anteil an Silizium pro Gewichtsanteil aus, was zur Wirtschaftlichkeit ihres Einsatzes bei der Herstellung von synthetischem Quarzglas beiträgt.

Die Polyalkylsiloxanverbindung ist dabei vorzugsweise ausgewählt aus der Gruppe, bestehend aus Hexamethylcyclotrisiloxan (D3), Octamethylcyclotetrasiloxan (D4), Dekamethylcyclopentasiloxan (D5), Dodecamethylcyclohexasiloxan (D6), Tetradekamethylcycloheptasi-loxan (D7), Hexadecamethylcyclooctasiloxan (D8) sowie deren linearen Homologen und beliebigen Mischungen der vorgenannten Verbindungen. Die Notation D3, D4, D6, D7 und D8 entstammt dabei einer von General Electric Inc. eingeführten Notation, bei der "D" die Gruppe [(CH₃)₂Si]-O- repräsentiert. Die Notation ist den auf dem Fachgebiet tätigen Personen bekannt. Im Rahmen der vorliegenden Erfindung können auch Mischungen der vorgenannten Polyalkylsiloxanverbindungen verwendet werden.

Wegen der großtechnischen Verfügbarkeit in hoher Reinheit wird derzeit Octamethylcyclotetrasiloxan (OMCTS) bevorzugt eingesetzt. Im Rahmen der vorliegenden Erfindung ist es daher insbesondere bevorzugt, wenn es sich bei der Polyalkylsiloxanverbindung um Octamethylcyclotetrasiloxan (D4) handelt. Dem Fachmann ist bekannt, dass auch alternative Rohstoffe wie zum Beispiel Siliziumtetrachlorid oder Hexamethyldisiloxan (HMDS) oder andere einsetzbar sind.

Grundsätzlich ist es möglich, dass das Einsatzmaterial vor dem Einbringen in den Verfahrensschritt einer Aufreinigung unterzogen wird. Dem Fachmann sind solche Aufreinigungsverfahren bekannt.

Die Verdampfung des Einsatzmaterials kann mit oder ohne Anwesenheit einer Trägergas-Komponente erfolgen. Bevorzugt erfolgt die Verdampfung des Einsatzmaterials in Anwesenheit eines Trägergases, da dadurch die Verdampfung bei Temperaturen unterhalb des Siedepunktes der Polyalkylsiloxanverbindung erfolgen kann. Dies bedeutet, dass der Einsatzmaterialdampf bevorzugt zusätzlich ein Trägergas umfasst. Eine solche Vorgehensweise ist bevorzugt, wenn die Verdampfung des Einsatzmaterials unterhalb seines Siedepunktes stattfinden soll. Das Inertgas ist bevorzugt chemisch inert und ist weiter bevorzugt Stickstoff oder Argon. Alternativ kann als Trägergas auch Sauerstoff verwendet werden. Dabei liegt das Molverhältnis der polymerisierbaren Polyalkylsiloxanverbindung zum Trägergas bevorzugt im Bereich von 0,01 bis 2, besonders bevorzugt im Bereich von 0,02 bis 1,5 ganz besonders bevorzugt im Bereich von 0,05 bis 1,25. Insbesondere ist es bevorzugt, dass als Trägergas Stickstoff mit einem Feuchtegehalt von kleiner 40 Volumen-ppm und als Polyalkylsiloxanverbindung OMCTS eingesetzt wird. Dabei ist es des Weiteren bevorzugt, dass das molekulare Verhältnis von OMCTS zu Stickstoff im Bereich von 0,015 bis 1,5 liegt.

Der Verfahrensschritt des Verdampfens ist dem Fachmann an sich bekannt. Dabei wird die Polyalkylsiloxanverbindung je nach gewähltem molekularem Verhältnis der Polyalkylsiloxanverbindung und Trägergas vorzugsweise bei Temperaturen zwischen 120 und 200 °C in eine dampfförmige Phase überführt. Dabei sollte die Verdampfungstemperatur in der Verdampfungskammer immer mindestens einige Grad oberhalb des Taupunktes der Polyalkylsiloxanverbindung sein. Der Taupunkt ist wiederum abhängig vom gewählten molekularen Verhältnis aus Polyalkylsiloxanverbindung und Trägergas. In einer bevorzugten Ausführungsform wird dazu die Polyalkylsiloxanverbindung vor dem Verdampfen auf Temperaturen zwischen 40 und 120 °C vorerwärmt und anschließend in eine Verdampfungskammer versprüht, die eine höhere Temperatur als die Vorerwärmung der Einsatzstoffe aufweist. Das inerte Trägergas kann in einer bevorzugten Ausführungsform zusätzlich auf Temperaturen von bis zu 250 °C vorerwärmt werden, bevor es der Verdampfungskammer zugeführt wird. Von Vorteil ist, dass die Temperatur in der Verdampfungskammer im Mittel immer oberhalb der Taupunktstemperatur der Mischung aus Polyalkylsiloxan und Trägergas liegt. Geeignete Verdampfungsverfahren werden z.B. in den Internationalen Patentanmeldungen WO 2013/087751 A und WO 2014/187513 A sowie der deutschen Patentanmeldung DE 10 2013 209 673 A beschrieben.

Im Rahmen der Erfindung beschreibt der Begriff "Taupunkt" die Temperatur, bei der sich ein Gleichgewichtszustand von kondensierender und verdunstender Flüssigkeit einstellt.

Bei der Verwendung von Temperaturen unterhalb des Siedepunkts des Einsatzmaterials erfolgt die Verdampfung bevorzugt zusammen mit einem inerten Trägergas.

Im Rahmen der vorliegenden Erfindung wird unter einer "Verdampfung" der Vorgang verstanden, bei der das Einsatzmaterial im Wesentlichen von der flüssigen Phase in eine gasförmige Phase überführt wird. Dies geschieht bevorzugt, indem, wie oben beschrieben, Temperaturen verwendet werden, welche oberhalb des Taupunktes der polymerisierbaren Polyalkylsiloxanverbindung als Hauptkomponente des Einsatzmaterials liegen. Dem Fachmann ist dabei bewusst, dass verfahrenstechnisch nicht ausgeschlossen werden kann, dass kleine Flüssigkeitstropfen des Einsatzmaterials mitgerissen werden können. Somit wird bevorzugt ein Einsatzmaterialdampf erzeugt, welcher vorzugsweise nicht weniger als 97 Mol.-%, bevorzugt nicht weniger als 98 Mol.-%, besonders bevorzugt nicht weniger als 99 Mol.-%, ganz besonders bevorzugt nicht weniger als 99,9 Mol.%, gasförmige Bestandteile enthält.

Der erzeugte Einsatzmaterialdampf wird in eine Reaktionszone geführt, in dem der Einsatzmaterialdampf durch Oxidation und/oder durch Hydrolyse zu SiO₂-Partikeln umgesetzt wird. Die resultierenden SiO₂-Partikel werden dann zur Ausbildung des Quarzglaskörpers abgeschieden.

Zeitgleich werden die oben beschriebenen Fluorierungsmittel in den Synthesebrenner eingeführt und ebenfalls im Sinn der vorstehend beschriebenen Verdampfung umgesetzt, sodass sich der Quarzglaskörper unter Einbau der entsprechenden Fluordotierung ausbildet.

Die vorbeschriebenen Fluorierungsmittel werden im Rahmen der vorliegenden Erfindung somit separat zu dem siliziumhaltigen Vorläufermaterial in den Synthesebrenner eingeführt und reagieren mit dem siliziumhaltigen Vorläufermaterial unter Ausbildung eines mit Fluor dotiertem Quarzglases.

Bei dem im erfindungsgemäßen Verfahren verwendeten Synthesebrenner kann es sich um einen Synthesebrenner mit Flammenhydrolyse oder einen Plasma-Synthesebrenner handeln, wobei das oben beschriebene Fluorierungsmittel vorzugsweise in die Flamme des verwendeten Synthesebrenners eingebracht wird.

Bei dem Synthesebrenner kann es sich beispielsweise um einen Plasma-Synthesebrenner handeln, der ausgewählt ist aus der Gruppe, bestehend aus einem RF-Plasmabrenner (HF-Plasmabrenner), Mikrowellen-Plasmabrenner, NF-Plasmabrenner, Gleichstrom-Plasmabrenner und Laser-Plasma-Brenner. Die dabei verwendeten Plasmen können bei Atmosphären-, Nieder- oder Hochdruck betrieben werden.

In dem Verfahrensschritt a. kann das erfindungsgemäß vorgesehene Fluorierungsmittel sowohl flüssig als auch gasförmig dem Synthesebrenner zugeführt werden. Geeignete Verfahrensweisen sind dem Fachmann hinlänglich bekannt.

Sollte in dem erfindungsgemäßen Verfahren das Fluorierungsmittel dem Synthesebrenner gasförmig zugeführt werden, kann das Fluorierungsmittel vorher in einem Verdampfer verdampft werden. Hierzu eignet sich beispielsweise eine Direktverdampfung des Fluorierungsmittels. Alternativ ist es möglich, dass das Fluorierungsmittel dem Synthesebrenner gasförmig zugeführt wird und vorher unter Verwendung eines Trägergases in einem Bubbler in einem Trägergas bereitgestellt wird. Bei dieser Verfahrensweise durchströmt ein Trägergas das zu verdampfende Fluorierungsmittel, wobei sich das Fluorierungsmittel in dem Trägergas anreichert und somit unter Einbau von Flur mit den SiO₂-Teilchen reagiert.

Alternativ kann das erfindungsgemäß vorgesehene Fluorierungsmittel dem Synthesebrenner in flüssiger Form zugeführt werden, beispielsweise in atomisierter Form. Dazu kann das Fluorierungsmittel vorher in flüssiger Form mit dem siliziumhaltigen Vormaterial gemischt werden. Der resultierende Dampf entsteht dann erst in der Flamme bzw. in dem Plasma, je nachdem welches Verfahren verwendet wird.

Im Rahmen der vorliegenden Erfindung ist es auch möglich, dass das erfindungsgemäß vorgesehene Fluorierungsmittel in einem klassischen Ultraschallvernebler in ein Aerosol überführt wird und somit in den Synthesebrenner bzw. die Flamme oder das Plasma des Synthesebrenners eingeführt wird.

Im Rahmen der vorliegenden Erfindung ist es natürlich auch möglich, dass alle Materialien separat in die Flamme oder das Plasma eingedüst werden. Hierzu können alle dem Fachmann an sich bekannten Vorrichtungen zum Zerstäuben von Flüssigkeiten verwendet werden. Beispielhaft genannt werden können Vorrichtungen mit Einstoffdüsen, Zweistoffdüsen, mechanischen Zerstäubern und Elektro-Spray-Zerstäubern.

In einer ersten Ausführungsform wird das erfindungsgemäße Verfahren dergestalt durchgeführt, dass die Verfahrensschritte b. des Abscheidens der aus Verfahrensschritt a. resultierenden SiO₂-Teilchen zu einem Körper und c. des Verglasens des aus Verfahrensschritt b. resultierenden Körpers nacheinander durchgeführt werden. Im Rahmen der vorliegenden Erfindung wird diese Verfahrensweise der ersten Ausführungsform als ein Sootverfahren bezeichnet.

In einer zweiten Ausführungsform wird das erfindungsgemäße Verfahren dergestalt durchgeführt, dass der Sootaufbau mit einem Plasmabrenner erfolgt und das resultierende Material direkt bei der Abscheidung verglast wird.

Diese beiden Verfahrensweisen werden nun nachstehend näher beschrieben:

### Erste Ausführungsform

In der ersten Ausführungsform wird, wie bereits erwähnt, das erfindungsgemäße Verfahren dergestalt durchgeführt, dass die Verfahrensschritte b. des Abscheidens der aus Verfahrensschritt a. resultierenden SiO₂-Teilchen zu einem Körper und c. des Verglasens des aus Verfahrensschritt b. resultierenden Körpers nacheinander durchgeführt werden. Die Verfahrensschritte b. und c. werden nun nachfolgend näher beschrieben.

### Verfahrensschritt b.

Im Rahmen der vorliegenden Erfindung kann der Verfahrensschritt b. des Abscheidens der aus Verfahrensschritt a. resultierenden SiO₂-Teilchen zu einem Körper auf unterschiedliche Weise erfolgen. Ohne auf eine besondere Ausführungsform beschränkt zu sein, werden nachstehend exemplarisch drei unterschiedliche Ausgestaltungen des Verfahrensschritts b. beschrieben:

### Erste Ausgestaltung des Verfahrensschritts b.

Der Verfahrensschritt b. kann beispielsweise dergestalt durchgeführt werden, dass ein Abscheiden der SiO₂-Teilchen zur Ausbildung des Quarzglaskörpers in Verfahrensschritt b. von außen auf einem Substrat erfolgt (Außenabscheidungsverfahren).

Bei diesen Verfahren handelt es sich um die allfällig im Stand der Technik bekannten OVD-(Outside Vapor Deposition)-Verfahren, VAD-(Vapor Axial Deposition)-Verfahren, POD-(Plasma Outside Deposition)-Verfahren, APCVD-(Atmospheric Pressure Chemical Vapour Deposition / Advanced Plasma Chemical Vapor Deposition)-Verfahren oder um ein PECVD-(Plasmagestützte chemische Gasphasenabscheidung)-Verfahren.

### Zweite Ausgestaltung des Verfahrensschritts b.

Darüber hinaus ist es möglich, dass der Verfahrensschritt b. dergestalt durchgeführt wird, dass ein Abscheiden der SiO₂-Teilchen zur Ausbildung eines Körpers in Verfahrensschritt b. innen in einem Substratrohr erfolgt (Rohrinnenbeschichtungsverfahren).

Bei diesen Verfahren handelt es sich um die allfällig im Stand der Technik bekannten MCVD-(Modified Chemical Vapor Deposition)-Verfahren, FCVD-(Furnace Chemical Vapor Deposition)-Verfahren, PCVD-(Plasma Chemical Vapor Deposition)-Verfahren oder PICVD-(Plasma Impuls Chemical Vapor Deposition)-Verfahren.

Bei dem MCVD-(Modified Chemical Vapor Deposition)-Verfahren werden das siliziumhaltige Ausgangsmaterial zusammen mit dem erfindungsgemäß vorgesehenen Fluorierungsmittel im Inneren eines Substratrohres von außen mit einem Heizbrenner beheizt. Obwohl hier streng genommen in der Flamme keine Synthesereaktion stattfindet, wird der hierbei außen verwendete Brenner im Rahmen der vorliegenden Erfindung als Synthesebrenner bezeichnet.

Bei dem FCVD-(Furnace Chemical Vapor Deposition)-Verfahren werden das siliziumhaltige Ausgangsmaterial zusammen mit dem erfindungsgemäß vorgesehenen Fluorierungsmittel im Inneren eines Substratrohres von außen durch eine elektrische Heizzone beheizt. Obwohl hier streng genommen kein Brenner mit einer Flamme verwendet wird, wird die hierbei außen verwendete Heizzone im Rahmen der vorliegenden Erfindung als Synthesebrenner bezeichnet.

Bei dem PCVD-(Plasma Chemical Vapor Deposition)-Verfahren oder PICVD-(Plasma Impuls Chemical Vapor Deposition)-Verfahren werden das siliziumhaltige Ausgangsmaterial zusammen mit dem erfindungsgemäß vorgesehenen Fluorierungsmittel im Inneren eines Substratrohres von außen beheizt, indem ein Plasma Das Plasma von außen induziert im Rohr gezündet wird. Obwohl hier streng genommen kein Brenner mit einer Flamme verwendet wird, wird das hierbei außen verwendete Plasma im Rahmen der vorliegenden Erfindung als Synthesebrenner bezeichnet.

Im Prinzip dient bei allen dieser Ausgestaltungen der Innenabscheidung die Wärmequelle dazu, die Vorläufersubstanz zu dissoziieren und die dotierten Partikel zu synthetisieren, die dann im Rohr entweder als Sootschicht oder direktverglast abgeschieden werden. Bei allen Verfahren, die im Rohr stattfinden, wird extra Sauerstoff hinzugefügt.

### Dritte Ausgestaltung des Verfahrensschritts b.

Außerdem ist es möglich, in das Substratrohr einen Stab einzuführen, der dann z.B. durch einen Plasmaprozess im Rohr beschichtet wird. Am Ende des erfindungsgemäßen Verfahrens kann dann der beschichtete Stab entweder aus dem Rohr entnommen werden oder das ebenfalls innenbeschichtete Substratrohr wird auf den beschichteten Kernstab direkt kollabiert, um die Vorform herzustellen.

Die Synthese-Reaktion in einem Substratrohr der zweiten und dritten Ausgestaltung kann dabei durch Wärmeeinbringung von außen, beispielsweise mittels E-Ofen, H₂O₂-Brenner, durch Erzeugung eines Plasmas innerhalb des Substratrohres oder einem Laserbrenner erfolgen.

Üblicherweise werden diese erfindungsgemäß vorgesehenen Maßnahmen zur Abscheidung von Quarzglasteilchen zur Ausbildung eines Quarzglaskörpers in einer Reaktionskammer durchgeführt. Geeignete Reaktionskammern sind beispielsweise eine ALD-(Atomic Layer Deposition)- oder MLD-(Molecular Layer Deposition)-Reaktionskammer.

Im Rahmen der vorliegenden Erfindung kann der Verfahrensschritt b. so durchgeführt werden, dass aus dem siliziumhaltigen Vorläufermaterial zunächst ein poröser Sootkörper gebildet wird, der dann in dem anschließenden Verfahrensschritt c. verglast wird. Hierbei handelt es sich um das bereits eingangs beschriebene Sootverfahren.

Ein Sootkörper im Rahmen der vorliegenden Erfindung ist ein poröser Rohling, der durch das Abscheiden von SiO₂-Partikel auf einem Träger gewonnen wird und der durch Verglasen in das endgültige Quarzglas überführt wird. Im Allgemeinen ist die Struktur des SiO₂-Sootkörpers ausreichend gasdurchlässig, was eine gleichmäßige Gasphasenbehandlung oder Sinterung erlaubt. Im Bereich von Schichten mit einer höheren Dichte ist dies nur eingeschränkt möglich, da diese Schichten Diffusionsbarrieren darstellen, die bei Trocknungs- und Sinterungsprozessen ein ungleichmäßiges Behandlungsergebnis verursachen können. Diese Problematik stellt sich wegen langer Diffusionswege insbesondere bei großvolumigen SiO₂-Sootkörpern mit hohen Wandstärken. Im Rahmen der vorliegenden Erfindung erfolgte die Dotierung des SiO₂-Sootkörpers zeitgleich mit dem Einbau der Fluordotierung.

Für die Herstellung derartiger Sootkörper steht dem Fachmann eine Vielzahl von Verfahren zur Verfügung. Als Beispiele seien die sogenannten CVD-Prozesse genannt, insbesondere das OVD- und das VAD-Verfahren. Beim OVD-Verfahren (Outside Vapor Deposition) werden SiO₂-Partikel auf einer Zylindermanteloberfläche eines länglichen Trägers abgeschieden, der um seine Längsachse rotiert. Dabei kann der Träger beispielsweise aus Keramik, Graphit oder Quarzglas bestehen. Beim VAD-Verfahren (Vapor Axial Deposition) werden die SiO₂-Partikel auf einem scheibenförmigen rotierenden Träger in Richtung der Sootkörper-Längsachse aufgebaut. In beiden Verfahren können die SiO₂-Partikel schichtweise auf dem Träger unter Bildung des Sootkörpers abgeschieden werden.

Die entsprechenden SiO₂-Sootkörper weisen eine poröse Struktur auf, sodass die Fluorierungsmittel durch die Poren des SiO₂-Sootkörpers in die dreidimensionale Struktur des Körpers eindringen können und eine homogene Fluorierung des SiO₂-Sootkörpers bewirken.

In einer Ausgestaltung des erfindungsgemäßen Verfahrens wird der im Verfahrensschritt b. erhaltene poröse Sootkörper im anschließenden Verfahrensschritt c. verglast.

### Verfahrensschritt c.

In dem Verfahrensschritt c. des erfindungsgemäßen Verfahrens wird der fluorierte Sootkörper verglast. Vorzugsweise liegt die Verglasungstemperatur in Verfahrensschritt c. in einem Bereich von 1100 bis 1500 °C, vorzugsweise 1150 bis 1350 °C. Um Blasenbildung im späteren Quarzglas zu vermeiden hat es sich als vorteilhaft erwiesen, wenn die Verglasung im Unterdruck oder unter Helium- oder Helium-/Fluorierungsmittel Mischgasatmosphäre durchgeführt wird. Dies hat weiterhin den Vorteil, dass das Material der Prozesskammer nicht durch aggressive und korrosive Gase angegriffen wird und daher einem verringerten Verschleiß unterliegt.

Um die Materialien, insbesondere der Prozesskammer, zu schonen, hat es sich als vorteilhaft erwiesen, wenn im Rahmen des Sootverfahrens die Dotierung des Sootkörpers und die Verglasung des fluorierten Sootkörpers in unterschiedlichen Prozesskammern erfolgen. Daher erfolgt gemäß dem erfindungsgemäßen Verfahren die Verglasung in Verfahrensschritt c. in einer zweiten Prozesskammer, die sich von der ersten Prozesskammer unterscheidet. Auf diese Weise kann jede der Prozesskammern für die entsprechenden Prozessschritte optimiert werden und eine übermäßige Belastung der Materialien, beispielsweise durch aggressive und korrosive Gase bei hohen Temperaturen, wird vermieden. Daher ist eine Ausführungsform bevorzugt, in der das Verglasen in Verfahrensschritt c. in einer zweiten Prozesskammer erfolgt, die sich von der ersten Prozesskammer, in der die Verfahrensschritte a. und b. durchgeführt werden, unterscheidet. Dabei kann es sich bei der zweiten Prozesskammer beispielsweise um einen Zonenofen handeln, in dem die Verglasung des fluorierten Sootkörpers zonenweise erfolgt. Vorzugsweise wird die zweite Prozesskammer nicht mit fluorhaltigen Gasen beaufschlagt.

Der Verfahrensschritt c. des Verglasens des fluorierten SiO₂-Sootkörpers kann in den üblichen, dem Fachmann an sich bekannten Öfen durchgeführt werden. Beispiele sind Öfen mit einer konstanten Temperatur, Gasdrucksinteröfen, Vakuumöfen, Durchflussöfen, Öfen bei Normal- oder Niederdruck.

Weiterhin bevorzugt handelt es sich bei der zweiten Prozesskammer um einen Verglasungsofen. Derartige Öfen sind dem Fachmann bekannt und können entsprechend den jeweiligen Anforderungen an die Größe und Form des Sootkörpers im erfindungsgemäßen Verfahren eingesetzt werden.

### Zweite Ausführungsform

In einer weiteren Ausgestaltung des erfindungsgemäßen Verfahrens werden die Verfahrensschritte b. und c. zumindest teilweise zeitgleich durchgeführt und der resultierende Körper bereits mit dem Synthesebrenner verglast.

In der zweiten Ausführungsform wird im Allgemeinen ein Plasmabrenner verwendet, in welchen das erfindungsgemäße Fluorierungsmittel zusammen mit dem siliziumhaltigen Ausgangsmaterial eingebracht wird.

Das in dieser Ausführungsform verwendete Plasma hat eine sehr hohe Prozesstemperatur, wobei die Synthese und Verglasung weit weg vom thermischen Gleichgewicht erfolgen. Daher können mit dieser zweiten Ausführungsform sehr viel höhere Fluor-Konzentrationen im Glas erzeugt werden als mit den zuvor beschriebenen Verfahrensweisen über den Sootkörper (erste Ausführungsform). In der Regel werden Oberflächentemperaturen in einem Bereich von 2500 °C erreicht.

Ein Plasma, in dem Fluor-haltiges Quarzglas synthetisiert wird, kann man auf unterschiedliche Arten erzeugen. Beim POD-Verfahren wird beispielsweise ein sogenannter Plasmabrenner verwendet.

Entsprechende gattungsbildende Verfahren der zweiten Ausführungsform, in welchen die erfindungsgemäß vorgeschlagenen Fluorierungsmittel verwendet werden, sind in der EP 2 736 856 A und der DE 102 31 037 C beschrieben.

Demnach wird das erfindungsgemäße Verfahren der zweiten Ausführungsform vorzugsweise so durchgeführt, dass im Rahmen eines bereits vorstehend genannten POD-Verfahrens (Plasma Outside Deposition) auf einem Zylinderaußenmantel eines Kernstabs aus Quarzglas eine Mantelglasschicht aus mit Fluor dotiertem Quarzglas erzeugt wird. Hierfür wird ein Plasmabrenner eingesetzt, dem eine siliziumhaltige Ausgangsverbindung, Sauerstoff und eine Fluorverbindung zugeführt werden und der entlang des um seine Längsachse rotierenden Kernstabs reversierend bewegt wird. Durch Reaktion der Ausgangssubstanzen in der Plasmaflamme bildet sich mit Fluor dotiertes SiO₂, das auf dem Kernglas schichtweise abgeschieden und dabei unter Bildung der fluorhaltigen SiO2-Mantelglasschicht direkt verglast wird.

Die Direktverglasung kann prinzipiell auch in einem Rohr (z.B. beim PCVD-Verfahren) oder auf einem Stab, der in ein Abscheiderohr eingeführt wird, durchgeführt werden.

Dabei ist es im Rahmen der vorliegenden Erfindung insbesondere bevorzugt, wenn - wie in der EP 2 736 856 A beschrieben - ein übermäßiges Abkühlen der Vorform im Bereich des einen Wendepunktes der Brennerbewegung entgegengewirkt wird. Dieses erfolgt im Allgemeinen dadurch, dass das jeweils abkühlende Ende der Vorform der temporären oder andauernden Einwirkung einer direkten oder indirekten Beheizung ausgesetzt wird. Eine direkte Beheizung wird durch ein Heizelement erreicht, eine indirekte Beheizung durch Wärmeabgabe eines Wärmespeichers oder durch Reflexion eines Wärmestrahlungsreflektors. Als "Vorform" wird hierbei der Verbund von Substratkörper und Mantelglasschicht bezeichnet, auch wenn die Mantelglasschicht noch nicht vollständig ausgebildet ist.

In jedem Fall wirkt die Beheizung auf das eine Ende der Vorform im Rahmen dieser Ausgestaltung zumindest dann ein, wenn die Plasmaabscheidung im Bereich des anderen Endes erfolgt, und sie wirkt einem Abkühlen dieses Endes insoweit entgegen als dessen Temperatur höher ist als sie ohne die Einwirkung der Beheizung wäre. Demnach wird beim erfindungsgemäßen Verfahren der axiale Temperaturgradient dadurch verringert, dass dessen Minimaltemperatur angehoben wird (im Vergleich zum Standardverfahren ohne Beheizung der Endbereiche). Das Beheizen der Vorformenden ist zwar von Vorteil für eine axial homogenere F-Abscheidung bzw. eine Reduktion des axialen F-Gradienten, es geht aber prinzipiell auch ohne das Heizen der Enden. So kann man z.B. die Plasmaleistung beim Beschichtungsprozess axial ändern oder man lebt mit den größeren F-Gradienten an den Vorformenden.

Weitere optionale und bevorzugte Ausgestaltungen dieser Verfahrensweise können der EP 2 736 856 A entnommen werden, die diesbezüglich durch Bezugnahme in die vorliegende Erfindung eingeschlossen werden.

Darüber hinaus kann die zweite Ausführungsform auch dergestalt durchgeführt werden, indem einem mehrdüsigen Abscheidebrenner ein wasserstofffreier Medienstrom enthaltend ein Glasausgangsmaterial und ein Trägergas zugeführt wird, das Glasausgangsmaterial mittels des Abscheidebrenners in eine Plasmazone eingebracht und darin unter Bildung von SiO₂-Partikeln oxidiert wird, und die SiO₂-Partikel auf einer Ablagerungsfläche abgeschieden und dabei direkt verglast werden, wobei der Medienstrom mittels des Abscheidebrenners in Richtung auf die Plasmazone fokussiert wird. Das Glasausgangsmaterial enthält dabei die erfindungsgemäß vorgeschlagene fluorhaltige Komponente (Fluorierungsmittel).

Weitere optionale und bevorzugte Ausgestaltungen dieser Verfahrensweise können der DE 102 31 037 C entnommen werden, die diesbezüglich durch Bezugnahme in die vorliegende Erfindung eingeschlossen werden.

Im Rahmen der vorliegenden Erfindung sind bezüglich der zweiten Ausführungsform auch Abwandlungen denkbar, bei denen in der Plasmaflamme keine SiO₂-Synthese erfolgt, sondern das SiO₂-Material in Form einer Körnung (ggf. Sand) in das Plasma eingebracht und gegebenenfalls mit Fluor dotiert wird. Eine derartige Abwandlung ist in der US 6,477,864 beschrieben, dessen diesbezügliche Offenbarung ebenfalls durch Bezugnahme in die vorliegende Erfindung eingeschlossen wird.

In einer weiteren Ausführungsform erfolgen die Verfahrensschritte b. und c. in einem isothermen Ofen mit Quarzglas-Prozessrohr. Entsprechende Öfen sind dem Fachmann aus dem Stand der Technik bekannt.

Beim Transport des fluorierten Sootkörpers von der ersten Prozesskammer in die zweite Prozesskammer kann es infolge des Wassergehalts der Atmosphäre zu einer Eindiffusion von Wasser und infolge davon zu einer Kontamination mit OH-Gruppen und damit einhergehend zu einer axial und radial inhomogenen Verteilung der OH-Gruppenkonzentration in dem späteren Quarzglas kommen. Weiterhin hat die Anwesenheit der OH-Gruppen im fluorierten Sootkörper den Nachteil, dass diese im Bereich der üblichen Arbeitswellenlängen optischer Fasern eine hohe Absorption zeigen und daher die Qualität des späteren Produkts negativ beeinflussen. Um die OH-Konzentration im fluorierten Sootkörper zu senken, hat es sich daher als vorteilhaft erwiesen, wenn der fluorierte Sootkörper vor der Verglasung einem Trocknungsschritt unterzogen wird.

Daher ist eine Ausführungsform bevorzugt, in der der fluorierte Sootkörper in der zweiten Prozesskammer vor der Verglasung einem weiteren Trocknungsschritt unterzogen wird, wobei das Trocknen bei einer Temperatur in einem Bereich von 700 bis 1200 °C erfolgt. Es hat sich gezeigt, dass auf diese Weise Dekontaminationen beseitigt werden können. Durch das Erhitzen des fluorierten Sootkörpers auf eine Temperatur oberhalb von 700 °C werden OH-Gruppen freigesetzt, die infolge der Porosität des Zwischenproduktes vor der Erhitzungsfront wandern und das Zwischenprodukt verlassen. Damit bereits gereinigte Bereiche des Zwischenproduktes nicht von Neuem mit freigesetztem Wasser reagieren, können diese durch eine Spülung mit Inertgas oder durch Absaugen entfernt werden. Es hat sich als vorteilhaft erwiesen, die Verglasung des fluorierten Sootkörpers unter vermindertem Druck durchzuführen. Auf diese Weise erfolgt während des Sinterprozesses eine gleichzeitige Dehydrierung des Sootkörpers und etwaige Einschlüsse werden vermieden. Zudem wird die Blasenbildung im späteren Quarzglas minimiert. Dieses Verfahren hat allerdings den Nachteil, dass im Sootkörper physikalisch gebundene Dotierstoffe, insbesondere gasförmige Fluorverbindungen, während des Verglasungsprozesses, insbesondere in den äußeren Schichten, teilweise desorbieren können. Die Folge ist die Ausbildung eines unerwünschten Konzentrationsgradienten und eine Verarmung an Fluor. Diese Maßnahmen können in der zweiten Prozesskammer durchgeführt werden, so dass ein aufwendiger Umbau vermieden wird. Um eine neuerliche Kontamination zu verhindern, hat es sich als vorteilhaft erwiesen, wenn der Druck während des Trocknungsschritts innerhalb der zweiten Prozesskammer geringer ist als außerhalb der zweiten Prozesskammer. Besonders bevorzugt ist daher eine Ausführungsform, bei der der Druck während des Trocknungsschritts in der zweiten Prozesskammer weniger als 1 mbar beträgt.

In einer besonders bevorzugten Ausgestaltung der zuvor allgemein beschriebenen ersten Ausführungsform umfasst das erfindungsgemäße Verfahren die folgenden Verfahrensschritte:
- Verfahrensschritt A.1:: Bereitstellen eines gasförmigen siliziumhaltigen Vorläufermaterials für das Quarzmaterial und Bereitstellung eines gasförmigen Fluorierungsmittels in einem Synthesebrenner;
- Verfahrensschritt B.1:: Ausbildung eines Quarzglaskörpers unter Einbau der Fluordotierung, beispielsweise eines fluorierten Sootkörpers, wobei der Sootkörper eine mittlere Dichte in einem Bereich von 18 bis 30%, bezogen auf die relative Dichte von Quarzglas, aufweist;
- Verfahrensschritt B.2:: gegebenenfalls Trocknen des fluorierten Sootkörpers bei einer Temperatur in einem Bereich von 700 bis 1100 °C;
- Verfahrensschritt B.3':: gegebenenfalls chemisches Trocknen des fluorierten Sootkörpers bei einer Temperatur in einem Bereich von 700 bis 1100 °C in Gegenwart eines chlorhaltigen Gases;
- Verfahrensschritt B.3":: gegebenenfalls chemisches Trocknen des fluorierten Sootkörpers bei einer Temperatur in einem Bereich von 700 bis 1100 °C in Gegenwart eines chlorhaltigen Gases;
- Verfahrensschritt B.4:: gegebenenfalls Erhitzen des fluorierten Sootkörpers auf eine Temperatur oberhalb von 1000 °C, vorzugsweise 1000 bis 1200 °C, wobei der Druck innerhalb der Prozesskammer vorzugsweise geringer ist als außerhalb der Prozesskammer; und
- Verfahrensschritt C.1:: Verglasen des fluorierten Sootkörpers bei einer Temperatur oberhalb von 1000 °C in der Prozesskammer, wobei der Druck innerhalb der Prozesskammer geringer ist als außerhalb der Prozesskammer, unter Ausbildung des dotierten Quarzglases.

In einer besonders bevorzugten Ausgestaltung der zuvor allgemein beschriebenen zweiten Ausführungsform umfasst das erfindungsgemäße Verfahren die folgenden Verfahrensschritte:
- Verfahrensschritt A.1:: Bereitstellen eines gasförmigen siliziumhaltigen Vorläufermaterials für das Quarzmaterial und Bereitstellung eines gasförmigen Fluorierungsmittels in einem Synthesebrenner (z.B. Plasmabrenner)
- Verfahrensschritt B1/C1:: Abscheidung der im Synthesebrenner erzeugten, dotierten SiO₂-Partikel auf einem Substratstab (z.B. aus einer Quarzglaskeramik) und direkte Verglasung der SiO₂-Partikel. Hierzu kann der Synthesebrenner direkt genutzt werden.

Ein weiterer Gegenstand der vorliegenden Erfindung ist dotiertes Quarzglas, das gemäß dem erfindungsgemäßen Verfahren erhältlich ist. Ein solches Quarzglas zeichnet sich durch eine homogene Dotierung mit Fluor, auch bei hohen Fluorgehalten und eine geringe Blasigkeit aus.

Die Eigenschaften des Quarzglases, wie beispielsweise Brechzahl und Absorptionsmaxima, können durch die Anwesenheit ausgewählter weiterer Fremdatome im Quarzglas beeinflusst werden. Daher ist eine Ausführungsform bevorzugt, in der das Quarzglas neben Fluor weitere Dotanden aufweist, wobei der Dotierstoff vorzugsweise ausgewählt ist aus der Gruppe bestehend aus Al₂O₃, Yb₂O₃, Er₂O₃, NbO₂, TiO₂, Ce₂O₃, Y₂O₃, B₂O₃, P₂O₅, Tm₂O₃, Nd₂O₃, Sm₂O₃, GeO2, Ho₂O₃, Bi₂O₃, La₂O₃, Ga₂O₃, Li₂O, CS₂O und Stickstoffverbindungen, beispielsweise Si₃N₄, SiN. SiON und SiNH, sowie Mischungen davon. Die Dotierstoffe können z.B. aus der Gasphase abgeschieden, als Aerosol eingebracht und abgeschieden oder aus der Lösung dotiert werden.

Wie dem Fachmann bekannt ist, kann die Brechzahl von Quarzglas durch das gezielte Dotieren mit Fluor eingestellt werden. Allerdings sieht sich der Fachmann dabei häufig vor das Problem gestellt, dass die Menge an Fluor, die im Quarzglas vorhanden ist, durch den Herstellungsprozess begrenzt ist, da beispielsweise das Fluor durch entsprechende Verfahrensschritte wie Trocknen und Verglasen im Vakuum wieder aus dem Sootkörper ausgetragen wird. Das erfindungsgemäße Quarzglas zeichnet sich dagegen durch einen hohen Gehalt an Fluor sowie eine homogene Verteilung desselben im Quarzglas aus. So beträgt der Fluorgehalt im Quarzglas in einer bevorzugten Ausführungsform 1.000 bis 100.000 ppm, vorzugsweise 10.000 bis 90.000 ppm, weiter bevorzugt 20.000 bis 80.000 ppm, weiter bevorzugt 30.000 bis 80.000 ppm, jeweils bezogen auf Gewichtsanteile.

Quarzglas, insbesondere dotiertes Quarzglas, findet eine breite Anwendung in der Optik und Analytik. Daher ist ein weiterer Gegenstand der vorliegenden Erfindung die Verwendung des erfindungsgemäßen dotierten Quarzglases als optisches Bauteil, optische Faserform oder als Teil einer optischen Faser.

Weiterer Gegenstand der vorliegenden Erfindung ist die Verwendung der zuvor beschriebenen Fluorierungsmittel zur Herstellung von fluoriertem Quarzglas. Bezüglich besonderer Ausgestaltungen dieser Verwendungen wird auf die obigen Ausführungen zu dem erfindungsgemäßen Verfahren verwiesen.

## Patentansprüche

1. Verfahren zur Herstellung von fluoriertem Quarzglas, **gekennzeichnet durch** die folgenden Verfahrensschritte:
a. Erzeugen von SiO₂-Teichen in einem Synthesebrenner;
b. Abscheiden der aus Verfahrensschritt a. resultierenden SiO₂-Teilchen zu einem Körper;
c. Verglasen des aus Verfahrensschritt b. resultierenden Körpers,
**dadurch gekennzeichnet, dass** dem Synthesebrenner während des Verfahrensschritts a. ein Fluorierungsmittel zugeführt wird, welches einen Siedepunkt von größer gleich -10 °C aufweist.

2. Verfahren nach Anspruch 1, **dadurch gekennzeichnet, dass** das Fluorierungsmittel ausgewählt wird aus der Gruppe, bestehend aus
i. sauerstoffhaltigen Fluorierungsmitteln;
ii. nitrilhaltigen Fluorierungsmitteln.
iii. Mischungen der sauerstoffhaltigen und nitrilhaltigen Fluorierungsmittel.

3. Verfahren nach Anspruch 1 oder 2, **dadurch gekennzeichnet, dass** die sauerstoffhaltigen Fluorierungsmittel ausgewählt werden aus der Gruppe, bestehend aus
i. Perfluorketonen der allgemeinen Formel (I)
R_{F1}-CO-R_{F2} (I),
wobei der Rest R_{F1} ausgewählt wird aus der Gruppe, bestehend aus perfluorierten Kohlenstoffgruppen mit 1 bis 7 Kohlenstoffatomen und Fluor; und der Rest R_{F2} ausgewählt wird aus der Gruppe, bestehend aus perfluorierten Kohlenstoffgruppen mit 1 bis 7 Kohlenstoffatomen;
ii. Perfluorethern der allgemeinen Formel (II)
R_{F1}-C(X₁)(X₂)O-R_{F2} (II),
wobei der Rest R_{F1} ausgewählt wird aus der Gruppe, bestehend aus perfluorierten Kohlenstoffgruppen mit 1 bis 7 Kohlenstoffatomen und Fluor; der Rest RF₂ ausgewählt wird aus der Gruppe, bestehend aus perfluorierten Kohlenstoffgruppen mit 1 bis 7 Kohlenstoffatomen und die Reste X₁ und X₂ für Fluor oder CF₃ stehen;
iii. Hydrofluorethern der allgemeinen Formel (III)
R_{F1}-C(X₁)(X₂)O-R₂ (III),
wobei der Rest R_{F1} ausgewählt wird aus der Gruppe, bestehend aus perfluorierten Kohlenstoffgruppen mit 1 bis 7 Kohlenstoffatomen und Fluor, der Rest R₂ für eine nicht-fluorierte Kohlenwasserstoffgruppe mit 1 bis 3 Kohlenstoffatomen steht; und die Reste X₁ und X₂ für Fluor oder CF₃ stehen.

4. Verfahren nach Anspruch 1 oder 2, **dadurch gekennzeichnet, dass** die nitrilhaltigen Fluorierungsmittel ausgewählt werden aus der Gruppe, bestehend aus
iv. Perfluornitrilen der allgemeinen Formel (IV)
R_{F1}-C≡N
wobei der Rest R_{F1} ausgewählt wird aus der Gruppe, bestehend aus einer perfluorierten Kohlenstoffgruppe mit 1 bis 7 Kohlenstoffatomen.

5. Verfahren nach einem der Ansprüche 1 bis 4, **dadurch gekennzeichnet, dass** es sich bei dem Synthesebrenner um einen Synthesebrenner mit Flammenhydrolyse oder einen Plasma-Synthesebrenner handelt.

6. Verfahren nach einem der Ansprüche 1 bis 5, **dadurch gekennzeichnet, dass** das Abscheiden der SiO₂-Teilchen zur Ausbildung eines Körpers in Verfahrensschritt b. von außen auf einem Substrat erfolgt.

7. Verfahren nach einem der Ansprüche 1 bis 5, **dadurch gekennzeichnet, dass** das Abscheiden der SiO₂-Teilchen zur Ausbildung eines Körpers in Verfahrensschritt b. in einem Substratrohr erfolgt.

8. Verfahren nach einem der Ansprüche 1 bis 7, **dadurch gekennzeichnet, dass** die Verfahrensschritte b. und c. gleichzeitig erfolgen.

9. Verfahren nach einem der Ansprüche 1 bis 8, **dadurch gekennzeichnet, dass** das Fluorierungsmittel flüssig oder gasförmig dem Synthesebrenner zugeführt wird.

10. Verfahren nach Anspruch 9, **dadurch gekennzeichnet, dass** das Fluorierungsmittel dem Synthesebrenner gasförmig zugeführt wird und vorher in einen Verdampfer verdampft wird oder dass das Fluorierungsmittel dem Synthesebrenner gasförmig zugeführt wird und vorher einer Direktverdampfung unterworfen wird oder dass das Fluorierungsmittel dem Synthesebrenner gasförmig zugeführt wird und vorher unter Verwendung eines Trägergases in einem Bubbler in dem Trägergas angereichert bereitgestellt wird.

11. Verfahren nach Anspruch 9, **dadurch gekennzeichnet, dass** das Fluorierungsmittel dem Synthesebrenner in atomisierter Form oder als Aerosol flüssig zugeführt wird.

12. Verwendung von einem Fluorierungsmittel, welches einen Siedepunkt von größer gleich -10 °C aufweist, zur Herstellung von fluoriertem Quarzglas.

13. Verwendung nach Anspruch 12, **dadurch gekennzeichnet, dass** das Fluorierungsmittel
i. ein sauerstoffhaltiges Fluorierungsmittel;
ii. ein nitrilhaltiges Fluorierungsmittel; oder
iii. eine Mischung des sauerstoffhaltigen und des nitrilhaltigen Fluorierungsmittels ist.

14. Verwendung nach Anspruch 12 oder 13, **dadurch gekennzeichnet, dass** die sauerstoffhaltigen Fluorierungsmittel ausgewählt werden aus der Gruppe, bestehend aus
i. Perfluorketonen der allgemeinen Formel (I)
R_{F1}-CO-R_{F2} (I),
wobei der Rest R_{F1} ausgewählt wird aus der Gruppe, bestehend aus perfluorierten Kohlenstoffgruppen mit 1 bis 7 Kohlenstoffatomen und Fluor; und der Rest RF₂ ausgewählt wird aus der Gruppe, bestehend aus perfluorierten Kohlenstoffgruppen mit 1 bis 7 Kohlenstoffatomen;
ii. Perfluorethern der allgemeinen Formel (II)
R_{F1}-C(X₁)(X₂)O-R_{F2} (II),
wobei der Rest R_{F1} ausgewählt wird aus der Gruppe, bestehend aus perfluorierten Kohlenstoffgruppen mit 1 bis 7 Kohlenstoffatomen und Fluor; der Rest RF₂ ausgewählt wird aus der Gruppe, bestehend aus perfluorierten Kohlenstoffgruppen mit 1 bis 7 Kohlenstoffatomen und die Reste X₁ und X₂ für Fluor oder CF₃ stehen;
iii. Hydrofluorethern der allgemeinen Formel (III)
R_{F1}-C(X₁)(X₂)O-R₂ (III),
wobei der Rest R_{F1} ausgewählt wird aus der Gruppe, bestehend aus perfluorierten Kohlenstoffgruppen mit 1 bis 7 Kohlenstoffatomen und Fluor, der Rest R₂ für eine nicht-fluorierte Kohlenwasserstoffgruppe mit 1 bis 3 Kohlenstoffatomen steht; und die Reste X₁ und X₂ für Fluor oder CF₃ stehen.

15. Verwendung nach Anspruch 12 oder 13, **dadurch gekennzeichnet, dass** die nitrilhaltigen Fluorierungsmittel ausgewählt werden aus der Gruppe, bestehend aus
iv. Perfluornitrilen der allgemeinen Formel (IV)
R_{F1}-C≡N
wobei der Rest R_{F1} ausgewählt wird aus der Gruppe, bestehend aus einer perfluorierten Kohlenwasserstoffgruppe mit 1 bis 7 Kohlenstoffatomen.
